Europäisches Patentamt

European Patent Office

Office européen des brevets

(19)

(11) **EP 1 275 746 A2**

(12) **EUROPEAN PATENT APPLICATION**

(43) Date of publication:
**15.01.2003 Bulletin 2003/03**

(51) Int Cl.[7]: **C22C 45/00**, C22C 45/02,
C22C 45/04, B26B 21/00,
B26B 19/38, B26B 19/00

(21) Application number: **02012432.7**

(22) Date of filing: **10.06.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **25.06.2001 US 300691 P**

(71) Applicant: **WARNER-LAMBERT COMPANY**
**Morris Plains New Jersey 07950 (US)**

(72) Inventors:
• **Dechristofaro, Nicholas John**
**Chatham, New Jersey 07928 (US)**

• **Liebermann, Howard Horst**
**Succasunna, New Jersey 07876 (US)**
• **Orloff, Glennis Joan**
**Woodbridge, Connecticut 06460 (US)**

(74) Representative: **Tesch, Rudolf, Dr. et al**
**Warner-Lambert Company,**
**Legal Division,**
**Patent Department,**
**c/o Gödecke AG,**
**Mooswaldallee 1**
**79090 Freiburg (DE)**

(54) **Shaving articles formed from geometrically articulated amorphous metal alloys and processes for their production**

(57)    The invention relates to a shaving article formed of geometrically articulated amorphous metal alloy articles and processes for their production.

EP 1 275 746 A2

## Description

Background of the Invention

The present invention relates to shaving articles formed from amorphous metal alloys having an articulated three-dimensional ("3-D") geometric texture therein, as well as a process for producing the same.

Amorphous metal alloys (also often referred to as "amorphous metal alloys", "glassy metals" or "metallic glasses") typically lack any substantial long range atomic order. These amorphous metal alloys are characterized by X-ray diffraction patterns consisting of diffuse (broad) intensity maxima, qualitatively similar to the diffraction patterns observed for liquids or for inorganic oxide glasses. However, upon heating to a sufficiently high temperature, they begin to crystallize with the evolution of the heat of crystallization; correspondingly, the X-ray diffraction pattern thereby begins to change from that observed for amorphous to that observed for crystalline materials. Consequently, amorphous metal alloys are in a metastable state. This special metastable amorphous state of the alloys confers unique mechanical and physical properties to the alloy.

Amorphous metal alloys generally possess physical properties such as hardness and strength exceeding those of their crystalline counterparts. Since amorphous metal alloys, unlike crystalline alloys, have no long-range order in their atomic structure, the directionality of physical and magnetic properties normally associated with a crystalline periodic (crystalline) atomic structure is absent. Also, unlike conventional alloys, amorphous metal alloys are extremely homogeneous, being devoid of compositional heterogeneity, inclusions, and various other microstructural defects, making them less subject to the deleterious effects of these potential stress concentrators.

Amorphous metal alloys can be made by various techniques. Electroplating, vapor deposition, and sputtering are all methods by which material is deposited on an atom-by-atom basis. Under appropriate conditions, the atoms are "frozen" in-situ on contact with a substrate surface and normally cannot diffuse into the lower energy atomic configurations associated with that of a stable, periodic crystalline lattice. The resulting metastable structure can be a non-crystalline (glassy) one. Such process methods, however, are not economically feasible for producing large commercial quantities of amorphous metal alloys.

Another method for producing amorphous metal alloys is by rapidly cooling from the melt. Two major conditions apply in achieving a glassy structure by this method. First the composition selected should have a high glass transition temperature, $T_g$, and a low melting temperature, $T_m$. The glass transition temperature is that above which substantial atomic motion begins to occur. The melting temperature is that above which there is complete liquefication of a material. Specifically, the $T_g/T_m$ ratio should be as large as possible. Second, the liquid should be cooled as rapidly as possible from a temperature above $T_m$ to a temperature below $T_g$. In practice, it is generally found that the cooling rate for a melt-quenching method must be great enough (approximately 1 million degrees/second) to circumvent crystallization which would otherwise occur. Even at the high cooling rates typically used, only alloys with certain compositions can be melt-quenched into amorphous metal alloys. One class of such amorphous metal alloys consists of "glass-forming" metalloid atoms, eg. phosphorus, boron, silicon, and carbon as required alloy additions, usually in the 10 to 25 atomic percent range, in combination with late transition metal elements such as iron, nickel, cobalt, and chromium. Another class of metallic glasses consists of a mixture of early and late transition atoms.

When subjected to sufficiently high mechanical stress, amorphous metal alloys undergo heterogeneous plastic deformation through the formation of highly localized shear bands, at temperatures well below the glass transition temperature, $T_g$. This type of heterogeneous plastic deformation is similar to that of conventional crystalline alloys. At such low temperatures, amorphous metal alloys exhibit high strength and high modulus, and exhibit a fracture stress that is only marginally greater than the yield stress. This results in only a small amount of extension on tension before failure. In contrast, the mode of plastic deformation near and above $T_g$ is one in which the macroscopic strain in the specimen results from homogeneous deformation by viscous-like flow throughout the entire sample volume.

Discussions of the deformation behavior of amorphous metal alloys as a function of temperature appears not infrequently in the technical literature, e.g., Japanese Patent No. 53-57170 of May 24, 1978 to Masumoto. In this patent, Masumoto describes the temperature regime in which increased "fabricability" occurs. Masumoto also proposes that a forming process such as rolling, punching, pressing, pulling out, and bending will be viable in that temperature regime. Patterson et al. in Rapidly Quenched Metals III, vol.2 (1978) describes the ability to hot form amorphous metal alloy ribbon into a cup-like shape when deformed at elevated temperature. The authors teach an appreciation for the trade-off between hot forming temperature and time, and the risk of amorphous metal alloy crystallization when process temperature is too high.

Description of the Drawings

[0008]

　　Fig. 1 is a graph which shows the time-temperature dependence for complete stress relaxation in an $Fe_{80}B_{11}Si_9$ amorphous metal alloy.
　　Fig. 2a is a top view of an amorphous metal alloy strip having a geometrically repeating articulated topographical definition.

Fig 2b is a side view of the amorphous metal alloy strip according to Fig.2a.

Fig. 3a is a depiction of a further amorphous metal alloy strip having a second articulated topographical definition, which is not geometrically repeating.

Fig. 3b is a side view of the amorphous metal alloy strip according to Fig.3a.

Fig. 4 is a depiction of an embodiment of a cutting article produced from an amorphous metal alloy strip having a geometrically repeating articulated topographical definition.

Summary of the Invention

In one aspect the present invention there are provided a shaving article formed of amorphous metal alloys having an articulated topographical definition.

In another aspect of the invention there are provided methods for the production of shaving articles formed from amorphous metal alloys having an articulated topographical definition.

In a yet further aspect of the invention there are provided methods for the production of self-nesting amorphous metal alloy articles having an articulated topographical definition.

These and other aspects of the invention will become more apparent from the following detailed description of the invention.

Detailed Description and Description of Preferred Embodiments

The present invention provides novel amorphous metal alloy articles having an articulated topographical definition as well as processes for their production. Such articulated topographical definitions are created by the application of selected forces to a generally planar ("2-dimensonal") amorphous metal foil or ribbon in order to introduce permanent deformations therein so to produce a non-planar ("3-dimensional") amorphous metal foil or ribbon which includes a geometric pattern, texture, profile or other feature, collectively referred to as "articulated topographical definitions". With respect to such articulated topographical definitions, it is required only that there be introduced permanent deformations which will distort or distend the generally planar amorphous metal foil or ribbon, as is usually applied in an "as cast" form, so to provide a permanent non-planar three-dimensional profile. Such may be likened to indentations. At the very minimum, a single articulated topographical definition may be provided but more advantageously a plurality of geometrically repeating articulated topographical definitions. Such geometrically repeating articulated topographical definitions can be any shape or configuration which provide a regularly repeating pattern of articulated topographical definitions and ideally are those which show an interlock between their individual patterns. For example, pyramidal shapes, square shapes, circular shapes, and hexagonal shapes can all be used without limitation. Ideally, those which provide close packing at their base portions, especially hexagonal shape, pyramidal shape, square shapes, rectangular shapes, triangular shapes, etc. are to be generally preferred as the maximum amount of peaks per unit surface area of the articles can be produced.

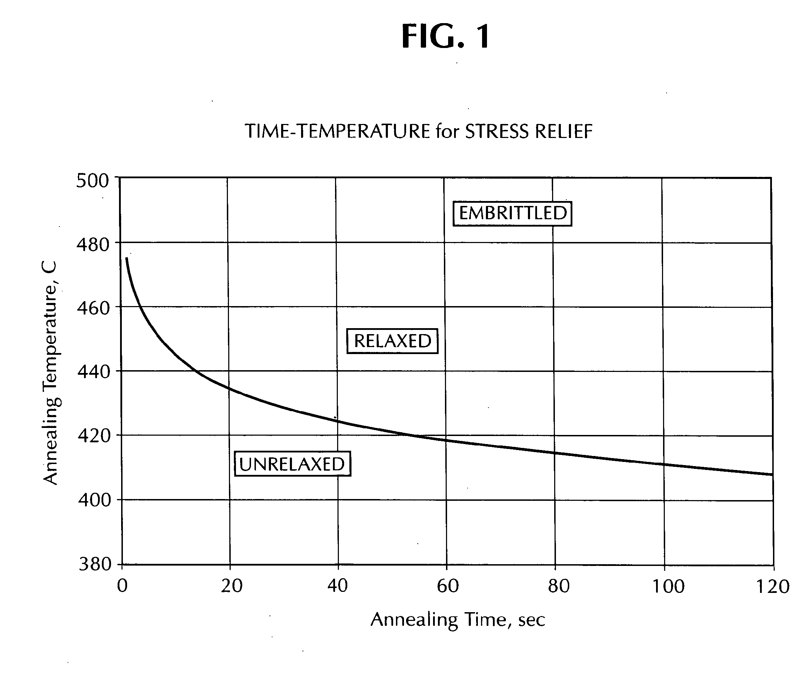

Successful practice of the present invention relies upon the exploitation of stress relaxation characteristics of the amorphous metal alloy. Stress relaxation in amorphous metal alloys is intimately linked to atomic structure relaxation, in which the "free volume" which is quenched-in during production is gradually dissipated while a test piece undergoes a shape change, such as the development of geometrically articulated including patterns, textures or other definitions. The greater the free volume content of an amorphous metal alloy, the greater its ability to take on geometric definition during processing. Figure 1 shows the time-temperature dependence of stress relaxation for an amorphous metal alloy having nominal composition $Fe_{80}B_{11}Si_9$.

It is to be understood that any amorphous metal alloy composition which may be provided with at least one but preferably a plurality of articulated topographical definitions may be practiced and is considered to be within the scope of the present inventive teaching. By way of non-limiting example, the compositions of amorphous metal alloys which may be subjected to the process according to the invention include those which are primarily composed of Fe, Ni, Cr, Co and V, to which optionally, but in some cases desirably are added small amounts, i.e., from 0.1 to 15 atomic percent, but preferably from 0.5 to 6 atomic percent of certain elements such as Al, Si, Sn, Sb, Ge, In, or Be. Frequently the addition of these latter recited elements in the amounts discussed improved the glass forming characteristics of the amorphous metal alloys, viz., the amorphous state is more readily obtained and is often more thermally stable. Particularly useful amorphous metal alloys are those which may be represented by either the formula:

$$M_k Y_p$$

wherein:

M is a metal selected from one or more of the group consisting of Fe, Ni, Co, V and Cr;
Y represents one or more elements from the group consisting of P, B and C;
k represents atomic percent, and has a value of from about 70 - 85;
p represents atomic percent, and has a value of about 15 - 30;

as well as by the formula:

$$M_aY_bZ_c$$

wherein:

M, Y are as defined above.
Z is one or more elements selected from the group Al, Si, Sn, Ge, In, Sb or Be:
a represents atomic percent and has a value of from about 60 - 90;
b represents atomic percent and has a value of from about 10 - 30;
c represents atomic percent and has a value of from about 0.1 - 15; and, a+b+c = 100.

It is to be understood however that these exemplary amorphous metal alloy compositions are provided by way of illustration and not by way of limitation as it is contemplated that virtually all compositions of amorphous metal alloys which may successfully be formed according to the inventive process taught herein may enjoy the benefits of the invention.

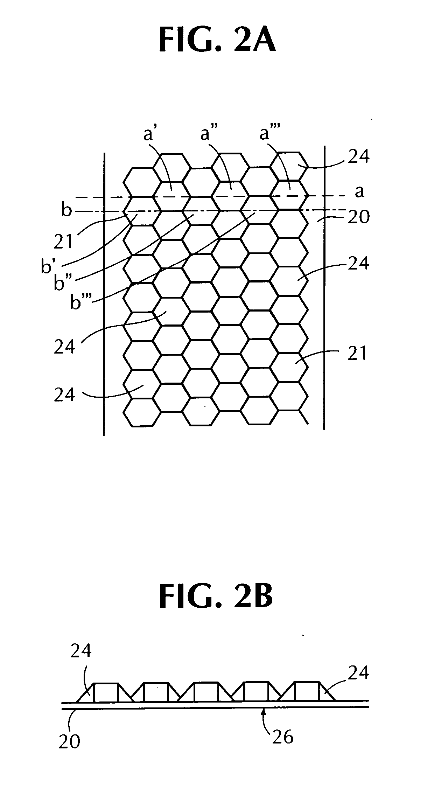

Turning to Figures 2a and 2b, there are depicted one example of an amorphous metal foil strip or tape (20) having a plurality of geometrically repeating articulated topographical definitions (24), where each of the articulated topographical definitions has a hexagonal base (26) and which tapers to a plateau (28) at the peak of each articulated topographical definitions (24). As a review of this Figure will reveal, close packing of the individual articulated topographical definitions are possible due to the interlocking nature of the bases of each. As can be seen, the hexagonal geometry of these bases provides such close packing.

With reference to Figures 2a and 2b, it is also to be understood that it is clear that each of the articulated topographical definitions according to the invention also have geometric dimensions which are to be considered. For example, each articulated topographical definition has a base dimension, which includes a base area (21) within the plane of the amorphous metal foil strip or tape (20). Naturally, it is to be understood that where a maximum number of articulated topographical definitions are to be introduced to an amorphous metal ribbon, that the respective size of each single articulated topographical definition, and their base areas should be small. The converse is also true. For example, with reference to the generally hexagonal articulated topographical definitions shown on Figures 2a and 2b three generally hexagonal articulated topographical definitions are present per row. This is depicted on Fig. 2a with regard to reference lines "a" and "b" each of which bisects the three generally hexagonal articulated topographical definitions, three (a', a", a"') on reference line "a" and three (b', b", b"') on reference line "b". A denser packing of articulated topographical definitions could easily have been introduced into the amorphous metal ribbon by providing generally hexagonal articulated topographical definitions having smaller individual base areas. It is also contemplated that articulated topographical definitions of different shapes and configurations could be used as well, and that such articulated topographical definitions need not have abutting bases as the layout of generally hexagonal articulated topographical definitions shown in Fig. 2a.

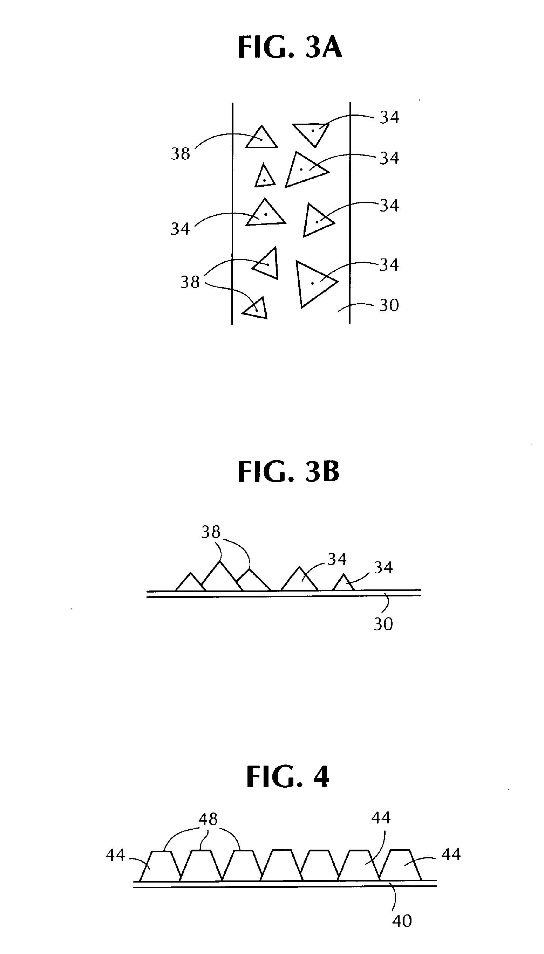

Figures 3a and 3b illustrate an alternative embodiment of an amorphous metal alloy ribbon (30) which has introduced therein a series of individual articulated topographical definitions (34) which are not closely packed, but which form individual discrete articulated topographical definitions. As can be seen from Figure 3a, each of these individual articulated topographical definitions (34) are randomly positioned within the amorphous metal alloy strip depicted, and indeed, these articulated topographical definitions are of different sizes. Namely, while each of the depicted articulated topographical definitions is an equilateral triangle in its base, and tapers to a point (38) (intended to be extending outward of the paper, and depicted by a point), the non-packed arrangement of these articulated topographical definitions, as well as their different dimensions illustrates the concept that various configurations for articulated topographical definitions can be used and still enjoy the benefits of the invention. Specifically, Figure 3 also illustrates the concept that articulated topographical definitions of different geometries and/or relative dimensions, including differing heights, can also be provided to a single amorphous metal alloy foil according to the present inventive principles.

Throughout the description of the various embodiments of the invention, it is to be understood that the geometrical form described with reference to each of the figures is intended by way of illustration and not by way of limitation. These articulated topographical definitions can be of any form including polygonal or irregular polygonal forms. Thus, it is to be understood that different articulated topographical definitions other than those described with reference to a particular figure of example may be substituted for the particular articulated topographical definitions discussed or depicted herein.

The articulated topographical definitions are conveniently provided to the amorphous metal alloy by use of a mechanical means such as a roller die or a stamping die. What is referred to as a roller die is generally intended to mean two rollers having upon their surfaces a series of mating configurations which are intended to impart upon a body, such as an amorphous metal alloy strip or foil passing between the nip of these roller dies a series of articulated topographical definitions. Similarly, by a stamping die is meant a pair of dies having a mating surfaces, which are also intended to impart articulated topographical definitions to a material, particularly the amorphous metal foils or strips described herein which are placed in between these two dies. Both embodiments of dies, either the roller or stamping die can be used for the compression of the amorphous metal alloy for the strips take place in order to impart permanent deformation to the planar, two-dimensional foil or strip so as to impart permanent, non-planar three-dimensional profiles.

With regard to the appropriate operating conditions in order to provide such permanent articulated topographical definition, it would be recognized that the specific conditions will in great degree be dependent upon the thickness, as well as the chemical nature of the amorphous metal alloy being treated. Ideally, it is intended that the selection of an appropriate deformation temperature is to be based on the considerations of minimizing or eliminating crystallization during the stamping step, and ideally also based on the considerations of minimizing or eliminating embrittlement of the amorphous metal foil during this stamping step. As such, these specific conditions can be determined by routine trial steps which can be carried out by the skilled practitioner, and specific embodiments based on a specific amorphous metal alloy are described in more detail below. It is believed that based upon the specific examples, one of appropriate skill in the art may determine the appropriate stamping conditions without the exercise of undue experimentation.

The present invention can be practiced in any number of variations. The most direct means is to heat the amorphous metal alloy foil or strip to an elevated temperature and subsequently stamp or otherwise deform said amorphous metal alloy foil or strip utilizing an appropriate die. Alternately, the amorphous metal alloy foil or strip may be provided to a preheated die which is at a sufficiently elevated temperature such that during the stamping process the amorphous metal alloy body will be rapidly heated to an appropriate temperature. In a still further variation, both the amorphous metal alloy foil or strip and the stamping die(s) are heated to an elevated temperature prior to or during the stamping process.

With regard to the temperature at which the stamping process occurs, the applicant has discovered that while a higher elevated temperature typically results in a shorter residence time in the die, or alternately less pressure required of the die such is not particularly to be desired where there is a significant risk of crystallization and/or of embrittlement of the amorphous metal alloy foil or strip. Rather, it is beneficial to increase the residence time of the metal alloy foil or strip in the die while concurrently reducing the temperature of the stamping operation so that the risk or degree of crystallization is minimized. Such increased residence time also addresses the limitations of thermal diffusivity and ensures that the temperature throughout the thickness of the amorphous metal alloy foil or strip is substantially uniform.

In a yet further embodiment, an abrasive article according to the invention is produced by providing cutting edges to the articulated topographical definitions of the amorphous metal alloy strips produced according to the method described generally above. According to this further embodiment, portions of the articulated topographical definitions, and especially the peaks of the articulated topographical definitions are removed subsequent to their formation. These are literally "lopped off" exposing sharp cutting edges of the individual articulated topographical definitions. Such an operation can be done, for example, by grinding of portions of the articulated topographical definitions, or by any other mechanical operation, as well as by non-mechanical operations. It is only required that a portion of the articulated portions of the amorphous metal alloys be provided with a cutting edge. In a conventional a grinding operation, sharpening of the individual cutting edges of the articulated topographical definitions is also simultaneously achieved and thus, is amongst the preferred methods of production. Such an embodiment is illustrated in Fig. 4 which depicts in side view a cutting article according to the invention which includes an amorphous metal alloy strip (40) having a plurality of frustoconical articulated topographical definitions extending outwardly from a top face. The cutting edge (48) of each of these frustoconical articulated topographical definitions (44) is formed by grinding the peaks of articulated topographical definitions having a conical form so to remove the peaks thereof, resulting in the these frustoconical articulated topographical definitions (44). According to this particular embodiment, such a cutting article provides several unexpected and significant technical advantages over other cutting devices generally known in the art. The high hardness of the amorphous metal alloys are expected to provide longer lasting keen cutting edges which provide a longer service life to a cutting article made therefrom. Further, where the articulated topographical definitions have their peaks "lopped off" such as in a grinding operation, the resulting cutting edges are non-directional, that is to say that unlike a straight edge cutting article (such as a straight knife blade), cutting occurs upon any directional movement of the cutting articles described according to the present invention. Thus, orientation of cutting direction relative to a work piece is not a concern as in any direction, the cutting tool disposes a sharp edge for cutting.

It is to be understood that other configurations are also considered to fall within the scope of such cutting articles according to the invention including geometrically articulated amorphous metal alloys having circular, rounded, slotted, geometric, such as square or rectangular, and irregularly shaped features as well as any combination of these features which can be formed. The contour of the cutting edge formed from geometrically articulated amorphous metal alloys are also readily adjustable. The cutting edges can be straight, beveled or shaped.

It is contemplated that other techniques than those discussed previously, and in particular techniques which do not utilize a grinding step may also be used in the manufacture of such cutting tools as well. Such techniques include, by way of non-limiting example, formed by one or more of the known processes of electrochemical machining (ECM), electrical discharge machining (EDM), electrolytic machining, laser-beam machining (LBM), electron-beam machining (EBM), photochemical machining (PCM), or ultrasonic machining (USM). Edge formation may be followed with supplemental metallic or non-metallic coatings and procedures standard in the art such as coating with polytetrafluoroethylene (Teflon) or other lubricious materials, followed by heat treatments. EDM process involves the use of an EDM tool which is fed into the area to be cut. A dielectric fluid is placed into the area to be cut and rapid, repetitive spark discharges are fed between the tool and the articulated amorphous metal alloy to remove conductive material and consequently produce an aperture. Multiple tools may be employed to produce the multiple desired apertures. The EDM process is especially useful in situations where the cutting will be irregular and is capable of producing up to about 200 simultaneous holes. The ECM process cuts the articulated amorphous metal alloys via anodic dissolution in a rapidly flowing electrolyte between the steel and the shaped electrode. As with EDM, ECM may be employed to simultaneously produce multiple apertures and is capable of producing up to about 100 simultaneous holes.

Additionally, it is also contemplated that wherein the amorphous metal cutting article is mounted upon a suitable substrate, ideally one which is non-solid but which provides a more rigid support framework (such as a grid, peripheral or edge frame, etc.) than the articulated amorphous metal itself. Ideally, in use any material removed during a cutting operation falls through the interior of each of the individual articulated topographical definitions and can be readily removed away from the surface or object being cut. This is significant, as this ensures that the cutting articles made according to the invention are non-clogging, thus further extending the useful service life of said cutting article. By way of non-limiting example cutting devices include razors for use in personal care products, in particular 'shaving articles' also referred to simply as 'razors.' Further cutting devices include other tools such as planes, files, rasps, Surform®-type tools, sanding and abrasive tools, grinding wheels wherein a strip of the geometrically articulated amorphous metal alloys are mounted on the periphery of a wheel, as well as other tools not particularly elucidated here.

In a further and preferred aspect of the invention there are provided shaving articles formed utilizing amorphous metal alloy articles having articulated topographical definitions, as well as methods for their production. Shaving articles are those used in personal care products, and in particular are used for the removal of unwanted hair from the epidermis, and particularly include razors. Such shaving articles according to the invention are produced by providing cutting edges to the articulated topographical definitions of the amorphous metal alloy strips produced according to the methods described generally above discussed with reference to cutting articles. According to this embodiment, portions of the articulated topographical definitions, and especially the peaks of the articulated topographical definitions are removed subsequent to their formation. Various techniques may be utilized including known art grinding operations including those discussed in US 5604983 to Simms et al, US 5490329 and to Chylinski, US 4483068. Particularly useful and preferred techniques which are useful include those which do not require a grinding operation in order to produce a sharpened edge including the methods described in US 5983756 to Orloff, the contents of which are ire incorporated herein by reference.

The structure and design of the cutting edge aperture in such shaving articles as well as in cutting articles is essentially unlimited using non-traditional machining techniques. Circular, rounded, slotted, geometric, such as square or rectangular, and irregularly shaped features as well as any combination of these features can be formed and contoured. The contour of the cutting edge is also readily adjustable. The edge can be straight, beveled or shaped. Both lateral and longitudinal structures are readily formed using electrochemical machining, electrical discharge machining, electrolytic machining, laser-beam machining, electron beam machining, photochemical machining, ultrasonic machining, and other alternative machining techniques in a single step, in contrast to traditional grinding techniques which require extensive part manipulation and may not even be capable of producing these features.

The benefits of the invention described herein may also be enjoyed in a wide variety of other applications, although these applications are not necessarily elucidated here.

EXAMPLES

EXAMPLE 1

Input stock for development of the present invention was made by planar flow casting 25.4 mm wide $Ni_{68}Cr_7Fe_3B_{14}Si_8$ amorphous metal alloy ribbon. One cast was used to make ribbon having thickness 40 μm while another cast was used to make ribbon of thickness 90 μm. An Instron® tensile testing unit was equipped with an oven to enable high temperature testing/operations. Both load and temperature were computer controlled, following instructions programmed. A male/female axially loaded die assembly was constructed and used to attempt making articulated pyramidal impressions in pieces of the each of the ribbon types using various process parameters.

Crystallization temperature for the $Ni_{68}Cr_7Fe_3B_{14}Si_8$ amorphous metal alloy is 470°C, as determined by differential scanning calorimetry. Process temperatures between 325°C and 500°C were investigated. Process loads ranged from 2.22 to 6.67 kN, while process times were varied between 15 and 60 seconds. Process temperature was found to be the single most important variable in terms of enabling 3-D geometric feature formation at all. Process force was demonstrated to be the second most important variable, functioning primarily to define details of 3-D geometric feature articulation. It was found that process time is not an important variable for the range of process variables used.

The onset of 3-D geometric feature articulation occurs at higher temperature/force/time for thicker ribbon than for thinner ribbon. For example, this onset occurred when exceeding 400°C, 3.56 kN, 15 seconds for the 40 µm thick ribbon in comparison with having to exceed 400°C, 6.67 kN, 15 seconds for the 90 µm thick ribbon. Noticeable ribbon brittleness and warping were observed when processing at 500°C, even though 3-D geometric feature articulation was very good.

EXAMPLE 2

A 15 cm length of 40 µm thick $Ni_{68}Cr_7Fe_3B_{14}Si_8$ amorphous metal alloy strip was compressed using 1.78 kN force for 30 seconds in a die situated in an oven at 325°C. The resultant 3-D geometric pattern was ill-defined and, in fact, barely visible.

EXAMPLE 3

A 15 cm length of 40 µm thick $Ni_{68}Cr_7Fe_3B_{14}Si_8$ amorphous metal alloy strip was compressed using 3.56 kN force for 60 seconds in a die situated in an oven at 400°C. The resultant 3-D geometric pattern was very well articulated in every detail of the die.

EXAMPLE 4

A 15 cm length of 90 µm thick $Ni_{68}Cr_7Fe_3B_{14}Si_8$ amorphous metal alloy strip was compressed using 3.56 kN force for 60 seconds in a die situated in an oven at 375°C. The resultant 3-D geometric pattern was not well defined.

EXAMPLE 5

A 15 cm length of 90 µm thick $Ni_{68}Cr_7Fe_3B_{14}Si_8$ amorphous metal alloy strip was compressed using 6.67 kN force for 15 seconds in a die situated in an oven at 425°C. The resultant 3-D geometric pattern was very well articulated in every detail of the die.

While the invention is susceptible of various modifications and alternative forms, it is to be understood that specific embodiments thereof have been shown by way of example in the drawings which are not intended to limit the invention to the particular forms disclosed; on the contrary the intention is to cover all modifications, equivalents and alternatives falling within the scope and spirit of the invention as expressed in the appended claims.

**Claims**

1. A shaving article which comprises an amorphous metal alloy article having an articulated topographical definition.

2. A shaving article according to claim 1 comprising a plurality of articulated topographical definitions.

3. A shaving article according according to claim 1 which comprises a plurality of geometrically repeating articulated topographical definitions.

4. A shaving article according having an articulated topographical definition wherein the amorphous metal alloy has a composition which may be represented by the formula:

$$M_kY_p$$

wherein:

M is a metal selected from one or more of the group consisting of Fe, Ni, Co, V and Cr;
Y represents one or more elements from the group consisting of P, B and C;
k represents atomic percent, and has a value of from about 70 - 85;
p represents atomic percent, and has a value of about 15 - 30;

5. A shaving article according having an articulated topographical definition wherein the amorphous metal alloy has a composition which may be represented by the formula:

$$M_aY_bZ_c$$

wherein:

M is a metal selected from one or more of the group consisting of Fe, Ni, Co, V and Cr;
Y represents one or more elements from the group consisting of P, B and C;
Z is one or more elements selected from the group Al, Si, Sn, Ge, In, Sb or Be;
a represents atomic percent and has a value of from about 60 - 90;
b represents atomic percent and has a value of from about 10 - 30;

c represents atomic percent and has a value of from about 0.1 - 15; and, a+b+c = 100.

6. A process for the manufacture of a shaving article having an articulated topographical definition which comprises the steps of:

heating an amorphous metal alloy article to an elevated temperature and subsequently stamping or otherwise deforming the heated amorphous metal alloy article in a die.

7. The process according to claim 6 wherein the die is preheated.

8. The process according to claim 6 wherein the die is a roller die or a stamping die.

9. The process according to claim 6 wherein at last part of the articulated topographical definitions are selectively crystallized.

10. The process according to claim 6 wherein at last part of the articulated topographical definitions are ground to remove a part of the articulated topographical definitions.

FIG. 1

TIME-TEMPERATURE for STRESS RELIEF

# FIG. 2A

# FIG. 2B

# FIG. 3A

38

34

34

34

34

34

38

30

# FIG. 3B

38

34

34

30

# FIG. 4

48

44

44

44

40